# DEMANDE DE BREVET EUROPEEN

(11) **EP 0 939 580 A2**
(43) Date de publication de la demande: **01.09.1999**
(21) Numéro de dépôt: 99400386.1
(22) Date de dépôt: 18.02.1999
(51) Int. Cl.: H05B 3/86

(54) **Lunette arrière chauffante en verre feuilleté**

(30) Priorité: 28.02.1998 DE 29803544 U
(71) Demandeur: SAINT-GOBAIN VITRAGE, 92400 Courbevoie (FR)
(72) Inventeur: Gillner, Manfred, 52078 Aachen (DE); Mueller, K. H., 52078 Aachen (DE); Hoetz, Bernd, 41812 Erkelenz (DE)
(74) Mandataire: Muller, René

(57) **Abrégé**

Lunette arrière chauffante électrique en verre feuilleté munie de fils de résistance chauffants, noyés dans la couche intermédiaire thermoplastique s'étendant horizontalement et branchés en parallèle qui au niveau des deux bords latéraux du vitrage, sont connectés à des éléments de raccordement électrique caractérisée en ce que chacun des fils de résistance chauffants branchés en parallèle (6) forme une boucle méandreuse avec un nombre impair de segments de boucle (61 à 65) s'étendant sur la largeur de la lunette arrière, et en ce que les segments d'extrémité (60, 66) des fils de résistance chauffants (6) branchés en parallèle, suivant un trajet le long des bords latéraux correspondants (7, 8) de la lunette arrière, à courte distance les uns des autres, jusqu'à un élément de raccordement électrique commun.

## Description

La présente invention concerne une lunette arrière chauffante électrique en verre feuilleté munie de fils de résistance chauffants noyés dans la couche intermédiaire thermoplastique, s'étendant horizontalement et branchés en parallèle, qui, au niveau des deux bords latéraux du vitrage feuilleté, sont connectés à des éléments de raccordement électrique.

Les lunettes arrières chauffantes électriques connues de ce genre comportent des conducteurs collecteurs de courant constitués, en règle générale, de bandes de clinquant de cuivre étamé disposées le long des deux bords latéraux. La longueur de chacun de ces fils de résistance chauffants équivaut à la largeur de la lunette arrière et chaque fil de résistance chauffant est connecté à chaque extrémité à un des deux conducteurs collecteurs. Etant donné que la longueur des fils de résistance chauffants est limitée par la largeur du vitrage, il faut utiliser des fils de résistance accusant une résistance spécifique relativement élevée, c'est-à-dire des fils en tungstène fins. Ces derniers, sont déposés et fixés sous une forme droite ou ondulée sur la pellicule thermoplastique sur laquelle les conducteurs collecteurs ont été précédemment fixés.

En règle générale, les lunettes arrière sont montées sur un véhicule selon la technique du collage. Afin de protéger la colle des rayons UV et d'éviter que la colle ne soit visible de l'extérieur, tous les vitrages automobiles destinés à être montés selon la technique du collage sont pourvus, sur leur surface tournée vers l'intérieur de l'habitacle, d'un cadre décoratif opaque en émail de couleur sombre, noir de préférence. Les conducteurs collecteurs métalliques qui sont disposés à environ 1 à 2 cm du bord du vitrage, sont peu heureux d'un point de vue optique du fait de leur contraste par rapport au cadre décoratif situé derrière eux lorsque l'on observe le vitrage de l'extérieur. Ils sont dès lors recouverts à l'extérieur par une deuxième couche opaque. Cette autre couche opaque peut également être une couche d'une couleur similaire à celle du cadre décoratif, qui est reliée directement à la surface visible de l'extérieur du conducteur collecteur. Des formes de réalisation de ce genre sont connues de par le document DE 19 541 609 A1.

L'application d'une autre couche opaque sur la surface du vitrage adjacente à la couche intermédiaire thermoplastique dans le but de recouvrir les conducteurs collecteurs constitue une opération exigeante en main-d'oeuvre qui ne peut d'ailleurs être accomplie qu'une fois les deux vitres du vitrage bombées. L'application de cette couche en tant qu'encre à cuire avant le bombage était impossible jusqu'ici car les deux vitres adhérent l'une à l'autre lors de l'opération de bombage du fait que l'encre à cuire fond. Les résultats obtenus en revêtant les conducteurs collecteurs eux-mêmes d'une telle couche n'ont jusqu'alors pas été probants.

L'invention a pour but d'éviter les inconvénients précités et de concevoir une lunette arrière électrique chauffante du type cité dans le préambule de telle manière que la fabrication des lunettes arrière électriques chauffantes en soit simplifiée dans son ensemble et qu'en même temps un aspect irréprochable de cette lunette arrière chauffante soit obtenu.

Ce but est atteint conformément à l'invention par le fait que chacun des fils de résistance chauffants branchés en parallèle forme une boucle méandreuse avec un nombre impair de segments de boucle s'étendant sur la largeur de la lunette arrière, et que les segments d'extrémité respectifs des fils de résistance chauffants branchés en parallèle suivent un trajet le long des bods latéraux correspondants de la lunette arrière, à courte distance les uns des autres, jusqu'à l'endroit de raccordement électrique respectif.

La disparition méandreuse des fils de résistance chauffants permet d'utiliser des fils à résistance spécifique faible, par exemple des fils chauffants en cuivre ou en alliages de cuivre adaptés. Ces fils présentent des tensions internes plus faibles que celles des fils en tungstène et il est dès lors plus facile de les travailler. Une sélection adéquate des diamètres de fils permettra d'adapter la puissance de chauffage spécifique des fils de résistance chauffants aux besoins. L'utilisation de fils chauffants en des métaux autres que le tungstène présente un autre avantage majeur en ce que ces métaux permettent un contact de brasage avec l'élément de raccordement électrique nettement meilleur que celui obtenu avec le tungstène.

Un autre avantage majeur suivant l'invention est constitué cependant par le fait que, malgré le branchement en parallèle des fils chauffants, aucun conducteur collecteur latéral n'est nécessaire de sorte qu'aucune mesure ne doit être prise afin de recouvrir ou de masquer les conducteurs collecteurs. Quant aux fils chauffants eux-mêmes qui sont recouverts avantageusement d'un vernis de couleur sombre pour éviter des reflets indésirables, leur section est très faible et leur présence discrète. Les segments d'extrémité de ces fils chauffants s'étendent le long des bords latéraux dans les zones du vitrage dans lesquelles se trouve le cadre décoratif noir. Etant donné que ces derniers sont également recouverts d'un vernis de couleur sombre, ils ne sont guère mis en évidence devant l'arrière-plan sombre du cadre décoratif et ne constituent pas une gêne d'un point de vue optique.

Des aspects de réalisation adéquats et des développements avantageux de l'invention font l'objet des revendications dépendantes et découlent en outre ci-après d'un exemple de réalisation préféré de la nouvelle lunette arrière avec référence aux dessins.

Dans les dessins :

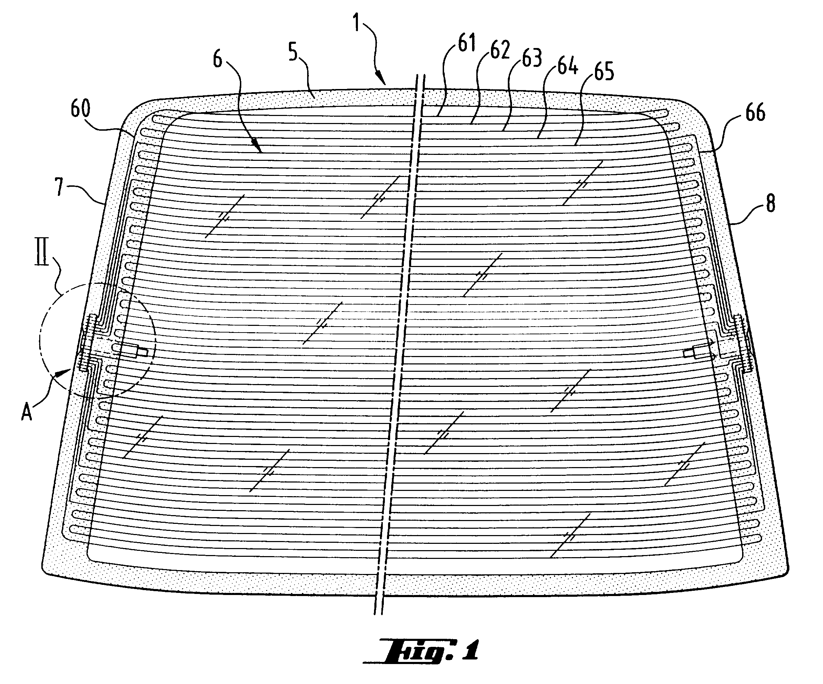

la Fig. 1 montre une lunette arrière suivant l'invention dans une vue générale, prise de l'extérieur;
la Fig. 2 montre un détail à plus grande échelle dans la zone II de la Fig. 1, mais dans une vue de l'autre côté de la lunette arrière, après le pivotement de cette dernière autour d'un axe horizontal, et
la Fig. 3 est une vue en coupe suivant la ligne III-III de la Fig. 2.

Le vitrage en verre feuilleté 1, réalisé sous la forme d'une lunette arrière chauffante électrique, comprend une vitre en verre 2 interne, c'est-à-dire tournée vers l'habitacle et une vitre en verre tournée vers extérieur qui sont reliées l'une à l'autre par une couche intermédiaire thermoplastique 4. La vitre interne 2 est pourvue d'un cadre décoratif 5 au niveau de la surface libre de son bord, le cadre étant fait d'une encre à cuire opaque, noire de préférence. Le vitrage en verre feuilleté est pourvu sur l'ensemble de sa surface de conducteurs chauffants électriques 6. Les fils chauffants 6 peuvent en principe être disposés à des distances mutuelles quelconques. De bons résultats sont obtenus lorsque l'écart entre les fils est de 5 à 20 mm, voire 10 mm. Dans le cas des fils chauffants 6, les fils retenus sont des fils chauffants de faible section. Ils sont placés, avant l'assemblage des couches constituant le vitrage en verre feuilleté, d'une façon connue sur la pellicule de polymère thermoplastique qui forme par la suite la couche intermédiaire 4 et ils sont fixés sur la pellicule par le biais d'un apport de chaleur.

Dans le cas représenté, douze fils chauffants en tout sont branchés en parallèle. Chaque fil chauffant est disposé sous la forme d'une boucle méandreuse et forme cinq segments de boucle 61, 62, 63, 64 et 65 qui couvrent dans chaque cas l'ensemble de la largeur du vitrage. Le premier segment d'extrémité 60 suit un trajet parallèle au bord latéral 7 pour atteindre l'endroit de raccordement électrique A, alors que l'autre segment d'extrémité 8 de ce fil chauffant 6 suit un trajet parallèle à l'autre bord latéral 8 pour atteindre l'endroit de raccordement électrique correspondant.

De la même façon que le fil de résistance chauffant 6 avec ses segments 60 à 66, les autres fils de résistance chauffants sont également disposés sous la forme de boucles méandreuses et leurs segments d'extrémité parcourent un trajet parallèle aux segments d'extrémité des segments 60 et 66 pour atteindre le raccordement électrique correspondant, où, aux fins du branchement en parallèle, ils sont interconnectés et raccordés à un câble plat muni d'un connecteur afin d'assurer le branchement en parallèle. Les segments d'extrémité branchés en parallèle des fils de résistance chauffants sont disposés avantageusement en respectant un écart d'environ 2 mm entre les fils, afin de répartir la chaleur fournie par les segments d'extrémité sur une plus grande surface et d'éviter les surchauffes locales.

Dans la forme de réalisation représentée, les éléments de raccordement électrique sont à peu près situés au milieu des bords latéraux, de telle sorte qu'en dessous et au-dessus de la ligne médiane formée par les éléments de raccordement électrique six fils chauffants sont chaque fois disposés sous la forme de méandres. Ainsi, le nombre des segments d'extrémité interconnectés entre eux en parallèle est réduit.

On utilisera de préférence un fil de cuivre d'un diamètre de 0,085 mm pour le fil de résistance chauffant, fil qui sera recouvert d'un vernis de couleur noire très peu réfléchissante. Etant donné que les segments d'extrémité des fils de résistance chauffants parcourent un trajet le long des bords latéraux dans les zones marginales recouvertes par le cadre décoratif 5 et qu'ils ne se détachent pas sur la couche d'encre à cuire noire du cadre décoratif 5 du fait du revêtement noir, l'esthétique n'est pas désagréable à l'oeil.

Afin de déposer les fils de résistance chauffants sur la couche intermédiaire thermoplastique de manière à former des boucles méandreuses, des appareils adaptés sont nécessaires à cet effet, qui sont cependant déjà connus pour cette finalité. Un des appareils adaptés à la pose des fils chauffants est décrit par exemple dans le document DE 19 541 427.

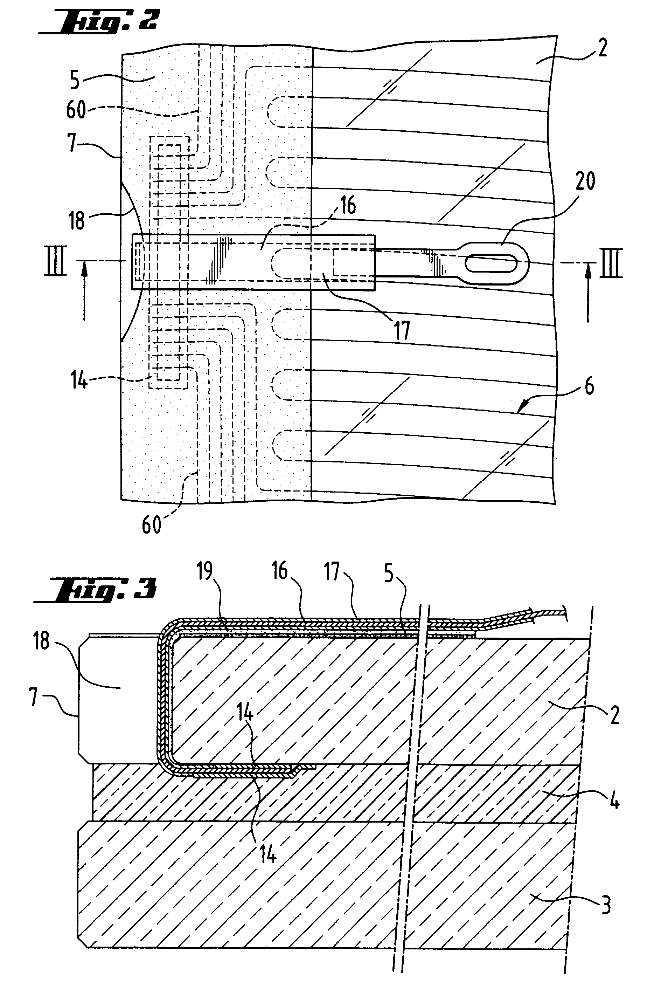

Comme cela découle des Fig. 2 et 3, les segments d'extrémité branchés en parallèle 60 des fils de résistance chauffants sont coudés à angle droit à leur extrémité et amenés sur une bande de clinquant de cuivre étamé 14 puis brasés à celle-ci. Un câble plat de raccordement 16 est brasé d'une façon connue au conducteur collecteur de faible étendue constitué par la courte bande de clinquant de cuivre. Le câble plat 16 est recouvert d'un revêtement isolant 17. Il passe autour du bord du vitrage 2 au niveau de l'échancrure 18 de ce bord et est collé à la vitre 2 par le biais d'une couche de colle 19. L'extrémité du câble de raccordement 16 est munie d'une fiche plate 20 qui est connectée à la douille correspondante du câble d'alimentation après le montage de la lunette arrière.

## Revendications

1. Lunette arrière chauffante électrique en verre feuilleté munie de fils de résistance chauffants, noyés dans la couche intermédiaire thermoplastique s'étendant horizontalement et branchés en parallèle qui au niveau des deux bords latéraux du vitrage, sont connectés à des éléments de raccordement électrique caractérisée en ce que chacun des fils de résistance chauffants branchés en parallèle (6) forme une boucle méandreuse avec un nombre impair de segments de boucle (61 à 65) s'étendant sur la largeur de la lunette arrière, et en ce que les segments d'extrémité (60, 66) des fils de résistance chauffants (6) branchés en parallèle, suivant un trajet le long des bords latéraux correspondants (7, 8) de la lunette arrière, à courte distance les uns des autres, jusqu'à un élément de raccordement électrique commun.

2. Lunette arrière chauffante électrique suivant la revendication 1, caractérisée en ce que les fils de résistance chauffants (6) sont recouverts d'un vernis de couleur sombre réduisant les reflets.

3. Lunette arrière chauffante électrique suivant les revendications 1 et 2, caractérisée en ce que la lunette arrière (1) est pourvue d'un cadre décoratif (5) en une encre à cuire de couleur sombre sur la surface tournée vers l'habitacle, en ce que les segments d'extrémité (60, 66) des fils de résistance chauffants parcourant un trajet parallèle aux bords latéraux sont disposés dans les zones marginales du cadre décoratif (5).

4. Lunette arrière chauffante électrique suivant l'une quelconque des revendications 1 à 3, caractérisée en ce que les fils de résistance chauffants (6) sont en cuivre ou en un alliage de cuivre, recouverts d'un revêtement limitant les reflets, et présentent un diamètre de 0,05 à 0,15 mm.

5. Lunette arrière chauffante électrique suivant l'une quelconque des revendications 1 à 4, caractérisée en ce que les segments d'extrémité (60, 66) des fils de résistance chauffants (6) qui s'étendent parallèlement aux bords latéraux (7, 8) du vitrage en verre feuilleté (1) sont disposés en respectant un écart mutuel de 2 à 5 mm.

6. Lunette arrière chauffante électrique suivant l'une quelconque des revendications 1 à 5, caractérisée en ce que, dans le champ de vision du vitrage en verre feuilleté (1), les fils de résistance chauffants (6) sont disposés en respectant un écart mutuel de 8 à 20 mm.

7. Lunette arrière chauffante électrique suivant l'une quelconque des revendications 1 à 6, caractérisée en ce que chacun des fils de résistance chauffants méandreux branchés en parallèle (6) comprend trois à sept segments de boucle (61 à 65) s'étendant sur la largeur du vitrage.

8. Lunette arrière chauffante électrique suivant l'une quelconque des revendications 1 à 7, caractérisée en ce que les extrémités des segments d'extrémité (60) des fils de résistance chauffants sont brasés à des conducteurs collecteurs fins (14), auxquels sont connectés des éléments de connexion à câbles plats (16).
